# EUROPEAN PATENT APPLICATION

(11) **EP 3 473 387 A1**
(43) Date of publication of application: **24.04.2019**
(21) Application number: 17197449.6
(22) Date of filing: 20.10.2017
(51) Int. Cl.: B25J 9/16, G05B 19/4061

(54) **ROBOT SUPERVISION SYSTEM**

(71) Applicant: ABB Schweiz AG, 5400 Baden (CH)
(72) Inventor: DING, Hao, 69115 Heidelberg (DE); BYNER, Christoph, 68167 Mannheim (DE); MATTHIAS, Björn, 76669 Bad Schönborn (DE)
(74) Representative: Marks, Frank

(57) **Abstract**

A robot supervision apparatus comprises
- a sensor (5) for detecting the location of a person (3) in the working range of a robot (1);
- at least one distance monitoring unit (6) for determining an actual distance be-tween the robot (1) and the person (3);
- a speed override unit (13) for limiting the speed of the robot (1) to a maximum speed dependent on the actual distance be-tween the robot (1) and the person (3);
- a unit (8) for defining a protective separation distance between the robot (1) and the person (3) ;
- a stop unit (8) distinct from the speed override unit (13) for controlling an automatic stop of the robot (1) in case the actual distance is below the protective separation distance.

## Description

The present invention relates to a robot supervision system capable of intervening in the control of a robot in order to avoid a collision between the robot and a person.

Wherever robots are used in industry, protecting staff from injury through the robots is a prime concern. Conventionally, enclosures have been built around the robots, equipped with alarms which cause an emergency stop of the robot whenever a person opens the enclosure. Such robots can only accomplish fully automatized, highly repetitive tasks that require no human intervention at all. A direct interaction between robot and human is not possible.

In order to enable robots and persons to co-operate without being separated by an enclosure, more sophisticated security concepts are required. In particular, persons and robots should be able share a workspace, without an immobile enclosure between both, e.g. in order to work one after the other on a same object.

International standards such as ISO 10218-1:2011 or ISO 13849-1:2015 set out the technical requirements a robot system has to fulfil if it is to share its workspace with a person. One of these requirements is speed and separation monitoring (SSM): Means must be provided by which the separation between the robot and a person can be measured, and which ensure an automatic stop of the robot in case the separation drops below a threshold which is dependent on the speed of the robot and the person. No robot system can be sold for use in a shared workspace unless it is certified to comply with these standards, and certification is a time- and resources-consuming process.

Certification can not only cause a significant delay in the marketing of a new robot system, it can even constitute an obstacle to the introduction of new safety features, since improvements in the supervision apparatus of the robot system will as a rule make a re-certification necessary.

Elementary SSM is likely to disturb the cooperation between person and robot, since cooperation requires both to come close together, but if the separation between both drops below the threshold, SSM will cause the robot to stop abruptly and without warning.

This problem is alleviated by dynamic SSM, in which a maximum allowed speed of the robot is defined as a function of the separation, so that when robot and person come close to each other, the speed of the robot will gradually decrease. If there is a separation below which the maximum allowed speed is zero, dynamic SSM will prevent the robot from hitting the person just as elementary SSM does, but it has the advantage that the person can tell from the decreasing speed of the robot that he is critically close, and can therefore easily avoid a total stop of the robot. The disadvantage is that dynamic SSM is far more complex than elementary SSM, which makes it much more tedious and expensive to certify a robot system using dynamic SSM.

The object of the present invention is to provide a robot supervision apparatus which provides advanced safety features and is nevertheless easy to certify.

This object is achieved by a robot supervision apparatus comprising
- a sensor for detecting the location of a person in the working range of a robot;
- a processing unit for defining a protective separation distance between the robot and the person;
- at least one distance monitoring unit for determining an actual distance between the robot and the person;
- a speed override unit for limiting the speed of the robot to a maximum speed dependent on the actual distance between the robot and the person;
- an stop unit distinct from the speed override unit for controlling an automatic stop of the robot in case the actual distance is below the protective separation distance.

The processing unit will usually define the protective separation distance taking account of the speed and the direction of movement of the robot so that the robot can be safely halted within said protective separation distance. The speed of the robot may be determined by the processing unit based on consecutive data from the sensor, or it may be communicated to the processing unit by a controller of the robot.

According to the present invention, in order to have the robot system certified, it is not necessary to demonstrate that the speed override unit meets all reliability criteria set out in the relevant standards; if the stop unit can be shown to do so, it is sufficient to show that the speed override unit will not interfere with a protection measure taken by the stop unit. This is a much easier task than to prove that the speed override unit will under no circumstances set an inadequately high maximum speed. In fact, if the speed override unit failed so completely as not to limit the speed of the robot at all, the stop unit would still ensure the safety of a person sharing the robot's workspace.

The stop unit can be designed to decelerate the robot more abruptly in case of an automatic stop than does the speed override unit in case of the actual speed exceeding the maximum speed. In fact, since if the speed override unit operates properly, it will prevent the stop unit from becoming active, the stop unit can be allowed to use quite harsh braking measures which, if used frequently, would be unacceptable because of premature wear or other undesirable consequences, but which have the advantage of allowing the protective separation distance to be set to a very small value.

The speed override unit should have a multi-valued output whose value is representative of the maximum speed allowed by it.

In contrast, the stop unit preferably has a binary output representative of whether a protective stop is occurring or not, and which can be used directly for operating a brake or other appropriate devices in the robot.

Another object of the invention is a robot system comprising a robot, a controller for controlling movements of the robot according to a predetermined program, and a supervision apparatus as defined above.

Further features and advantages of the invention will become apparent from the subsequent description of embodiments, referring to the appended drawings.

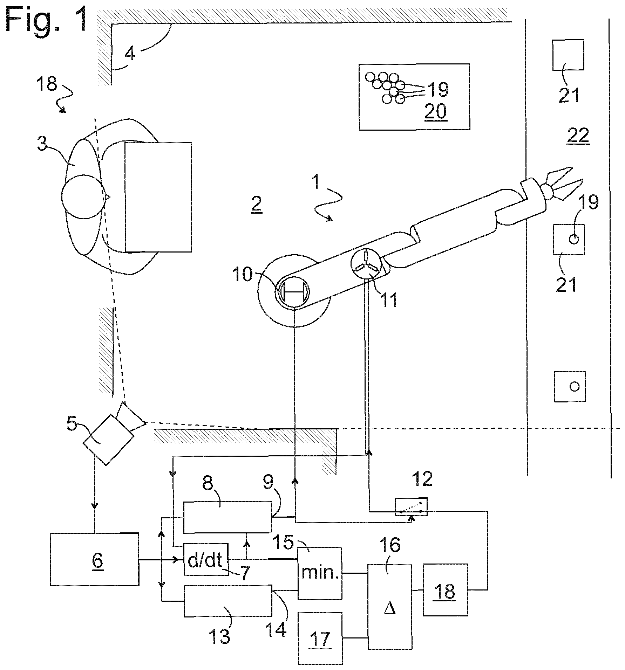

- Fig. 1: is a schematic diagram of a robot system embodying the present invention.

In the system of Fig. 1 a robot 1 is operating in a workspace 2 which can be freely accessed by a person 3. In the embodiment of Fig. 1 the workspace 2 is delimited by walls 4, and the person is entering the workspace through e.g. a door, but the workspace might just as well not have any physical boundaries and might simply be the detection range of a sensor 5, e.g. a camera, a radar sensor, an ultrasonic sensor or the like, or set of such sensors, based on whose data a distance monitoring unit 6 is capable of calculating the positions of the robot 1 and, if present, of one or more persons 3 and their respective separations from the robot 1.

The relative speed of the robot 1 and each person 3 can be obtained in a speedometer unit 7 by forming the time derivative of separations obtained at different times by the distance monitoring unit 6, or from data provided by rotation angle sensors, not shown, in robot 1.

A stop unit 8 receives the relative speed from speedometer unit 7 and determines a protective separation distance as a function of the relative speed. The protective separation distance has a positive nonzero value at a relative speed of zero and is the higher, the more negative the relative speed is, i.e. the faster the robot and the person approach each other. Thus it is ensured that on the one hand, a protective stop will be triggered when the distance between the two is not unnecessarily large but large enough to bring the robot to a halt before the two collide. Preferably, when determining the protective separation distance, the stop unit 8 also takes account of the direction in which the robot is moving, since the stopping distance will be larger when the robot is moving downward than when it is moving upward.

The stop unit 8 further receives the separation from distance monitoring unit 6 and triggers a protective stop of the robot 1 if it is lower than the current protective separation distance. To this effect a binary output 9 of stop unit 8 can be connected to a brake 10 located at a rotatable joint of robot 1. The binary output 9 may further be used to cut off power to a motor 11 of the robot, e.g. by a relay 12.

The separation determined by distance monitoring unit 6 is further input to a speed override unit 13. As a function of said separation, speed override unit 13 determines a maximum allowed speed for the robot 1 and provides it to minimum circuit 15 by output 14. As a second input signal, minimum circuit 15 receives the current speed of the robot 1 from speedometer unit 7. The smaller one of the two speeds is output to a difference circuit 16 which compares it to a target speed of the robot 1 as output by a robot motion controller 17. The motion controller 17 is programmed to have the robot 1 execute some arbitrary predefined manufacturing task, such as taking first workpieces 19 from a crate 20 and mounting them to second workpieces 21 passing by on an assembly line 22. Depending on the sign of the deviation between the speed output by difference circuit 16, power output by an inverter 18 to motor 11 is increased or decreased.

While the target speed is less than the maximum speed determined by speed override unit 13, the robot 1 follows precisely the commands of motion controller 17, as if the speed override unit 13 didn't exist. If the person 3 approaching the robot 1 causes the maximum allowed speed to drop below the target speed from the motion controller 17, the minimum circuit 14 outputs said maximum allowed speed, and inverter 18 power is reduced so as to bring down the speed of the robot to the maximum allowed speed.

In the robot system of Fig. 1, no conceivable malfunction of the speed override unit 13 can cause a failure of the stop unit 8. Therefore, the system can be certified as safe under any present or future standard if the stop unit 8 qualifies for certification, and modifications and optimizations can be carried out in the speed override unit 13. For example, if the relation between separation and maximum allowed speed is modified in speed override unit 13, or if the speed override unit is programmed to take into account additional parameters when determining the maximum allowed speed, unproven or even lacking reliability of the speed override unit 13 cannot affect the safety of the entire system.

### Reference Numerals

1 robot
2 workspace
3 person
4 wall
5 sensor
6 processing unit
7 speedometer unit
8 stop unit
9 binary output
10 brake
11 motor
12 relay
13 speed override unit
14 output
15 minimum circuit
16 difference circuit
17 robot motion controller
18 inverter
19 workpiece
20 crate
21 workpiece
22 assembly line

## Claims

1. A robot supervision apparatus comprising
- a sensor (5) for detecting the location of a person (3) in the working range of a robot (1);
- at least one distance monitoring unit (6) for determining an actual distance between the robot (1) and the person (3);
- a speed override unit (13) for limiting the speed of the robot (1) to a maximum speed dependent on the actual distance between the robot (1) and the person (3);
- a unit (8) for defining a protective separation distance between the robot (1) and the person (3);
- a stop unit (8) distinct from the speed override unit (13) for controlling an automatic stop of the robot (1) in case the actual distance is below the protective separation distance.

2. The robot supervision apparatus of claim 1 wherein the stop unit (8) is designed to decelerate the robot (1) more abruptly in case of an automatic stop than does the speed override unit (13) in case of the actual speed exceeding the maximum speed.

3. The robot supervision apparatus of claim 1 or 2, wherein the speed override unit (13) has a multi-valued output (14) whose value is representative of the maximum speed.

4. The robot supervision apparatus of claim 1, 2 or 3, wherein the emergency stop unit (8) has a binary output (9) representative of whether a protective stop is occurring or not.
